# EUROPEAN PATENT APPLICATION

(11) **EP 4 844 043 A1**
(43) Date of publication of application: **25.11.2026**
(21) Application number: 25178212.4
(22) Date of filing: 22.05.2025
(51) Int. Cl.: C10G 1/10, B01J 21/18, B01J 23/46

(54) **HYDROGENOLYSIS CATALYST AND METHOD FOR CONVERTING PLASTIC POLYMERS INTO NAPHTHA USING SUCH CATALYST**

(71) Applicant: Socar Turkey Arastirma Gelistirme Ve Inovasyon A.S., 35800 Aliaga, Izmir (TR)
(72) Inventor: Aydogdu, Arzum Ceren, 06800 Ankara (TR); Al, Furkan, 06800 Ankara (TR); Erkmen, Berrak, 35800 Aliaga, Izmir (TR); Suerkan, Ali, 35800 Aliaga, Izmir (TR); Ezdesir, Ayhan, 35800 Aliaga, Izmir (TR); Celik, Gokhan, 06800 Ankara (TR); Alparslan, Alp, 35800 Aliaga, Izmir (TR)
(74) Representative: Müller-Boré & Partner Patentanwälte PartG mbB

(57) **Abstract**

The present invention concerns a hydrogenolysis catalyst for minimizing olefin yield in the conversion of plastic waste to naphtha, wherein the hydrogenolysis catalyst wherein the catalyst comprises:
a carrier made of carbon, and, supported on said carrier,
an active metal which is selected from
(a) iridium in an amount 1 wt% to 6 wt%, based on the total weight of the catalyst, or
(b) iridium in an amount 1 wt% to 6 wt% together with ruthenium in an amount of 0.1 wt% to 3 wt%, based on the total weight of the catalyst.

## Description

The present invention concerns a hydrogenolysis catalyst for minimizing olefin yield in the conversion of plastic waste to naphtha.

Plastics are useful and versatile materials with a wide range of applications. However, the accumulation of plastic waste has become one of the most urgent problems of the modern world in recent decades. Most of the plastic waste is sent to landfills, but the degradation is minimal due to their chemical stability. Some of the plastic waste is incinerated, which leads to large emissions of CO₂, a greenhouse gas.

Therefore, the recycling of plastic waste is becoming an increasingly important solution to mitigate plastic pollution. The majority is mechanically recycled, whereby the plastic waste is sorted, cleaned, shredded, and melt-extruded into pellets, which can be used in new products. However, the quality of plastics obtained by mechanical recycling degrades over multiple cycles, so adding virgin plastics is necessary to maintain the properties, i.e., rigidity, thermal resistance, etc. In addition, mechanical recycling has a high energy demand, especially in the extrusion step, which means that the costs of recycled plastic are often higher than virgin plastic.

In contrast, chemical recycling, such as gasification, pyrolysis, and hydrogenolysis, offers an alternative by breaking down polymers into smaller molecules (depolymerization), enabling the conversion of mixed, unsorted, and contaminated plastic waste into valuable outputs such as fuels, oils, and feedstocks for petrochemical industries, which have broad market acceptance. Subsequently, high-quality products with properties equivalent to virgin materials can be produced. For instance, gasification produces syngas, while pyrolysis and hydrogenolysis generate liquid compounds alongside gases and char. Pyrolysis liquids are reactive and olefinic, whereas hydrogenolysis yields naphtha-like paraffinic liquids.

Naphtha can be further processed in steam-crackers, which require an olefin content of less than 1%. This requirement can often not be achieved by commercially available catalysts for hydrogenolysis. Consequently, novel hydrogenolysis catalysts are needed to minimize the olefin yield to less than 1%. This allows plastic waste to be efficiently converted into naphtha, which can then be processed into virgin plastic. Thus, the circularity of plastics at the carbon source can be achieved.

The above-mentioned technical problem is solved by the subject matter set out in the appended set of claims.

In particular, there is provided a hydrogenolysis catalyst, wherein the catalyst comprises:
a carrier (support) made of carbon, and, supported on said carrier,
an active metal which is selected from (a) iridium in an amount 1 wt% to 6 wt%, based on the total weight of the catalyst, or (b) iridium in an amount 1 wt% to 6 wt% together with ruthenium in an amount of 0.1 wt% to 3 wt%, based on the total weight of the catalyst.

An aspect of the present invention concerns a method for preparing the hydrogenolysis catalyst according to the present invention for the conversion of one or more plastic polymers into naphtha. The method comprising
mixing iridium and optionally ruthenium in a solvent to obtain a mixture;
adding the obtained mixture to the carrier made of carbon and removing the solvent; and
heating the carbon carrier to which the iridium and optionally the ruthenium have been added under hydrogen gas.

In a preferred embodiment of the present invention, the iridium and/or the ruthenium are provided as a metal-organic complex. In particular, the iridium may be provided as iridium(III) acetylacetonate, iridium(III) carbonyl, iridium(III) bipyridine, or iridium(III) cyclopentadienyl, whereof iridium(III) acetylacetonate is particularly preferable. The ruthenium may be provided as ruthenium(III) acetylacetonate, ruthenium(III) carbonyl, ruthenium(III) bipyridine, or ruthenium(III) cyclopentadienyl, whereof ruthenium(III) acetylacetonate is particularly preferable.

The solvent used in the method for preparing the hydrogenolysis catalyst is not particularly limited, and may be selected from the group consisting of chloroform, toluene, acetone, dichloromethane, and ethanol. In a preferred embodiment, the solvent is chloroform, which is commonly used for dissolving metal acetylacetonates.

Further, in the step of adding the obtained mixture to the carrier made of carbon and removing the solvent, it is preferable to add the obtained mixture dropwise via dry impregnation until the incipient wetness. This ensures a uniform distribution of the active component on the support. The subsequent removal of the solvent may be carried out at room temperature under vacuum, e.g., approximately 1.33 hPa, overnight. In the present application, room temperature refers to 25°C.

In a preferred embodiment, the step of heating the carbon carrier to which the iridium and optionally the ruthenium have been added under hydrogen gas is performed in a tubular furnace under a stream of hydrogen, wherein the stream of hydrogen may be between 50 mL min⁻¹ and 70 mL min⁻¹. Further, the temperature may be in a range between 400°C to 600°C, preferably 450°C and 550°C, and more preferably 470°C to 490°C. Lastly, the duration of the heating step is not particularly limited but may be between 0.5 h to 5 h, preferably 1 h to 4 h, and more preferably 1.5 h to 3 h. If the conditions fall within the above-defined ranges, the metal will beneficially be reduced.

The hydrogenolysis catalyst of the present invention comprises a carrier made of carbon. Carbon as a carrier is beneficial for providing a high surface area, good chemical and thermal stability, as well as a suitable porosity. In the present invention, the carrier can be composed solely of carbon, or other compounds can be added to the carbon, in which case the carbon content is more than 90% of the carrier. A carrier solely consisting of carbon is preferred.

In a preferred embodiment, the carrier of the hydrogenolysis catalyst is microporous carbon. The term microporous carbon is not particularly limited but may be defined as having a pore size of less than 2 nm. The pore size can be determined by porosimetry following the standard ISO 15901-1:2016. By having a pore size in the aforementioned range, the surface area can be increased, and the catalytic performance can be enhanced.

In a preferred embodiment, the carrier of the hydrogenolysis catalyst has a surface area of 200 m² g⁻¹ to 1300 m² g⁻¹, more preferably of 300 m² g⁻¹ to 1200 m² g⁻¹, and even more preferably of 400 m² g⁻¹ to 1100 m² g⁻¹. The surface area can be determined by the Brunauer-Emmett-Teller (BET) method following the standard ISO 9277:2022. By having a surface area in the aforementioned range, catalytic performance can be enhanced.

In a preferred embodiment, the carrier of the hydrogenolysis catalyst has a particle size of 10 µm to 100 µm, more preferably of 20 to 90 µm, and even more preferably of 30 to 80 µm. The particle size can be determined by dynamic light scattering (DLS) following the standard ISO 22412:2017. By having a surface area in the aforementioned range, the surface area can be increased, and the catalytic performance can be enhanced.

The hydrogenolysis catalyst of the present invention comprises 1 wt% to 6 wt% iridium supported on the carrier, based on the total weight of the catalyst. In a preferred embodiment, the hydrogenolysis catalyst comprises 2 wt% to 5.5 wt%, more preferably 3 wt% to 5 wt%, iridium, based on the total weight of the catalyst.

In a further embodiment of the present invention, in addition to iridium, the hydrogenolysis catalyst contains ruthenium in an amount of 0.1 wt% to 3 wt%, preferably 1 wt% to 2 wt%, based on the total weight of the catalyst.

In general, the hydrogenolysis catalyst of the present invention does not contain any other active metal than iridium and ruthenium.

If the contents of iridium and ruthenium fall within the above-defined ranges, the conversion to olefins can efficiently be prevented. In particular, if the hydrogenolysis catalyst comprises 3 wt% to 5 wt% iridium and 1 wt% to 2 wt% ruthenium, particularly preferably wherein the total content of iridium and ruthenium is 5 wt%, a product composition close to the composition of naphtha can be obtained, and the conversion to olefins can efficiently be prevented.

In the present invention, the specification "wt%" refers to the weight of iridium or ruthenium based on the total weight of the catalyst.

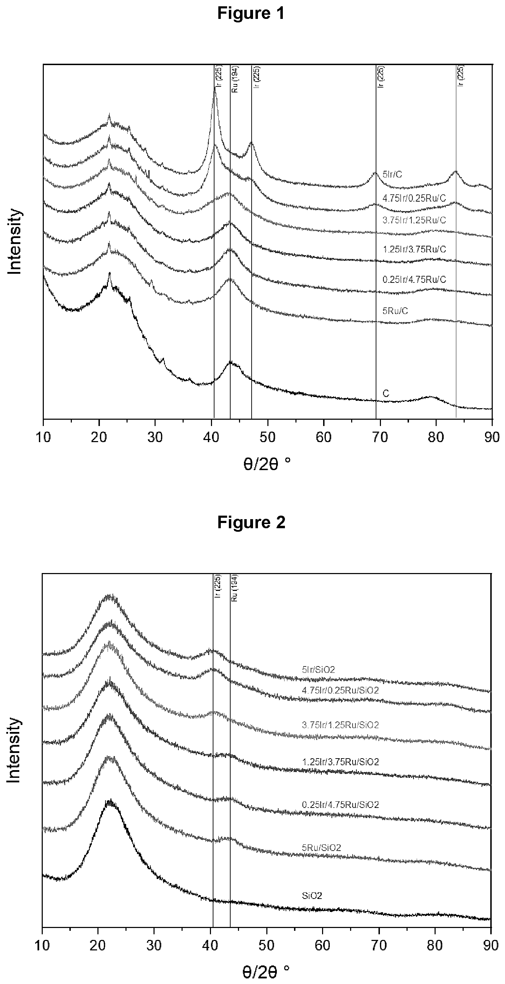

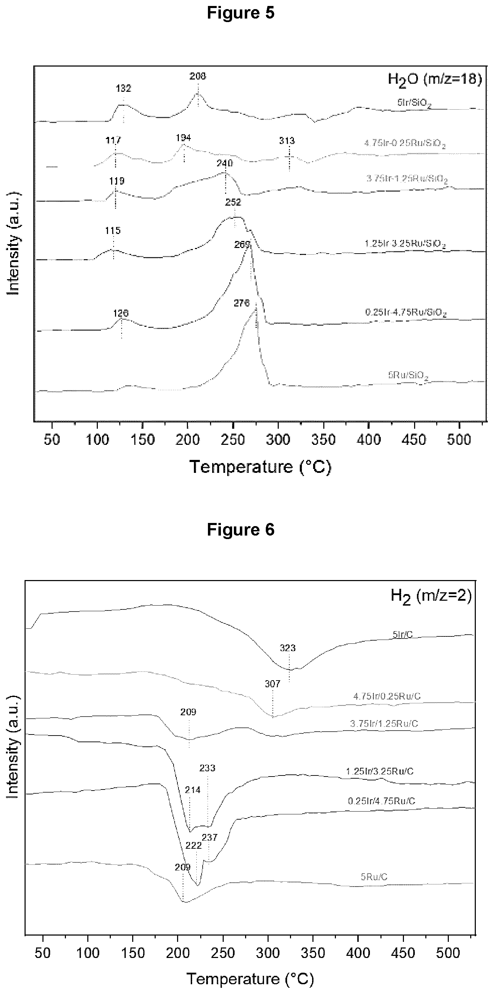

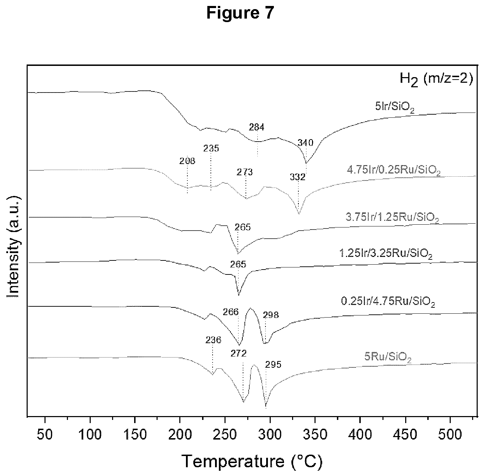

In the following, iridium and optionally ruthenium on carbon catalysts will be characterized by reference to Figures 1 to 8. In addition, the characterizations of iridium and/or ruthenium on carbon or SiO₂ catalysts, which do not fall within the claimed subject matter, are provided for comparative purposes.

Figures 1 and 2 show X-ray diffraction (XRD) scans of the iridium and/or ruthenium on carbon or SiO₂ catalysts. The XRD scans were obtained using a Rigaku MiniFlex desktop X-ray diffraction instrument with a Cu-targeted X-ray tube. The equipped detector was D/teX Ultra, 1D. The analysis was conducted with a scan speed of 5.00°/min and step width of 0.02° in the range of 10° - 90°.

The XRD patterns demonstrate that the metal sites are well dispersed on almost all samples, with the exception of 5 wt% Ir on carbon and 5 wt% Ir on SiO₂, which exhibited metallic Ir diffraction patterns.

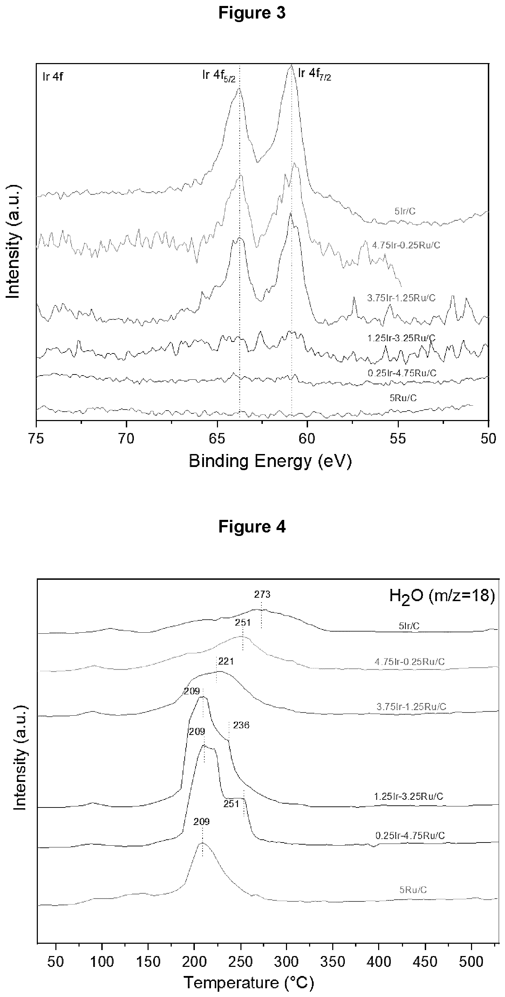

Figure 3 shows X-ray photoelectron spectroscopy (XPS) scans of the iridium and/or ruthenium on carbon catalysts. The XPS scans were obtained using a PHI 5000 VersaProbe instrument, using a monochromated Al Kα beam, which was focused at 200 µm. X-ray photoelectron spectra were corrected to 284.5 eV for C 1s to account for charging effects.

Ir 4f XPS spectra give valuable information about the oxidation states because characteristic peaks corresponding to Ir 4f 7/2 and Ir 4f 5/2 can be observed. On the other hand, XPS scans would reveal limited information about Ru sites on the surface because the Ru 3d spectrum overlaps with the C 1s peak.

For the 1.25 wt% Ir/ 3.75 wt% Ru on carbon catalyst sample, the Ir 4f region suggests that the catalyst sample may form an iridium-poor surface because no signal was obtained on 1.25 wt% Ir/ 3.75 wt% Ru on carbon, although 1.25 wt% is above the detection limit.

The XPS analysis of iridium-ruthenium on carbon mixed-metal catalysts reveals a complex interplay between the oxidation states of iridium and ruthenium, influenced significantly by their relative proportions. Higher loadings of iridium or ruthenium tend to favor the formation of oxidized species, whereas intermediate compositions exhibit a mixture of metallic and oxidized states. These findings provide crucial insights into the surface chemistry of iridium-ruthenium on carbon mixed-metal catalysts, which is essential for optimizing their catalytic performance.

Figures 4 to 7 show temperature-programmed reduction (TPR) profiles of the iridium and/or ruthenium on carbon or SiO₂ catalysts. The TPR profiles were obtained using a home-made flow chemisorption system, which is equipped with mass flow meters to create the desired gas environments, a tubular furnace, and a mass spectrometer (MS) (Hiden Analytical HPR-20 QIC) operated in scanning ion mode. 200 mg unreduced catalyst was placed in a ¼ in-OD quartz reactor and supported by quartz wool plugs. Then, the reactor was positioned at the center of the furnace and the exit stream was connected to the MS where m/z = 18 signal was monitored throughout the experiment to examine the formation of water vapor as a result of reduction. The reactor was first pretreated at 110°C for 10 minutes under 30 mL min⁻¹ He to remove physiosorbed water. Then, the analysis was performed in 30 mL min⁻¹ H₂ flow by heating up the sample from room temperature to 600°C.

The TPR profiles show the reduction behavior of different catalysts, indicated by the evolution of H₂O (m/z = 18) as a function of temperature.

The TPR profile for 5 wt% Ir on carbon shows a prominent reduction peak at 273°C, suggesting a strong metal-carrier interaction and possibly the presence of highly dispersed iridium species requiring higher temperatures for reduction. The iridium-ruthenium on carbon mixed-metal catalysts display intermediate reduction temperatures, reflecting the interactions between iridium and ruthenium, according to Dongil A.B. et al., "Ir supported over carbon materials for the selective hydrogenation of chloronitrobenzenes", Catalysis Today, Volume 249, 1 July 2015, Pages 72-78. Specifically, 4.75 wt% Ir/0.25 wt% Ru on carbon and 3.75 wt% Ir/1.25 wt% Ru on carbon have reduction peaks at 251°C and 221°C, respectively, both suggesting significant interactions that modify the reduction characteristics.

In contrast, 1.25 wt% Ir/3.25 wt% Ru on carbon and 0.25 wt% Ir/4.75 wt% Ru on carbon exhibit multiple peaks at 209°C and 236°C, as well as 209°C and 251°C, respectively, indicating a complex reduction process possibly due to the formation of iridium-ruthenium alloys or varying oxidation states. This suggests dominant ruthenium behavior with some influence from iridium. Further, 5 wt% Ru on carbon exhibits a major reduction peak at 209°C, indicating a more straightforward reduction process for Ru on carbon.

Lastly, the TPR profile for 5 wt% Ir on SiO₂, which has been examined to evaluate the effect of the carrier, exhibits multiple peaks at 132°C and 208°C. These multiple peaks suggest that the catalyst undergoes several reduction steps, according to Saadun et al. (2022). This behavior could be attributed to different oxidation states of iridium or varying degrees of dispersion on the SiO₂ support. On the other hand, the TPR profile of 5 wt% Ru on SiO₂ exhibits peaks at 276°C, suggesting various ruthenium species or particle sizes. The iridium-ruthenium on SiO₂ mixed-metal catalysts (4.75 wt% Ir/0.25 wt% Ru; 3.75 wt% Ir/1.25 wt% Ru; 1.25 wt% Ir/3.25 wt% Ru; and 0.25 wt% Ir/4.75 wt% Ru) exhibit intermediate reduction temperatures with multiple peaks (119°C to 269°C), implying significant metal interactions possibly leading to alloy formation.

Overall, the TPR profiles indicate that the carbon support plays a crucial role in the reduction behavior of these catalysts, with the presence of both metals leading to intermediate and multiple reduction steps, highlighting the importance of metal-carrier interactions and metal-metal interactions in catalyst design and performance.

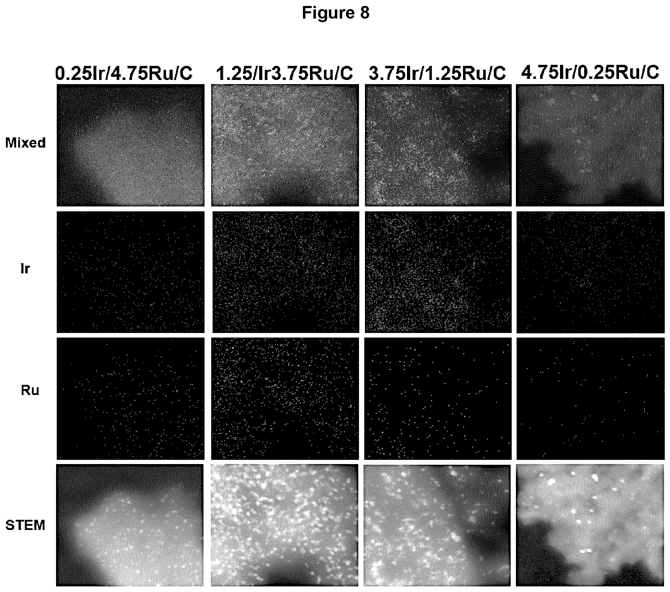

Lastly, Figure 8 shows an electron microscopy (EM) analysis of iridium-ruthenium on carbon mixed-metal catalysts. The EM images were obtained using FEI TALOS F200S TEM 200 kV. The samples were first deposited on an EM grid and loaded into the chamber for imaging.

The electron microscopy analysis was applied to see the positions of the metal nanoparticles, whether alloy formation can be observed or not, and the dispersion conditions of the metal loading. For all the bimetallic catalysts, alloy formation is observed depending on the composition. Metal nanoparticles are well-dispersed and stacked with each other rather than being agglomerated with their own kind. This situation is significant, especially for the 0.25 wt% Ir/4.25 wt% Ru on carbon and 1.25 wt% Ir/3.75 wt% Ru on carbon catalyst. For the 3.75 wt% Ir/1.25 wt% Ru on carbon catalyst, ruthenium dispersion is the highest, and the presence of ruthenium and ruthenium-iridium alloys are observed together. Iridium nanoparticles alone are not observed in significant amounts. In the scan of 4.75 wt% Ir/0.25 wt% Ru on carbon catalyst, a vast majority of ruthenium particles are in proximity to iridium particles.

Another aspect of the present invention provides a method for converting one or more plastic polymers into naphtha, comprising
contacting the one or more plastics with the hydrogenolysis catalyst described above;
reacting the reaction mixture under the pressure of 3 MPa to 5 MPa of H₂ at 300°C to 500°C;
cooling the reacted mixture down to room temperature; and
separating naphtha from the reacted mixture.

All features described above relating to the hydrogenolysis catalyst according to the present invention also apply to the method for converting one or more polymers into naphtha.

The one or more plastics are not particularly limited, but it has been proven that the hydrogenolysis catalyst according to the present invention is particularly suitable for the conversion of polyolefins. In a preferred embodiment of the present invention, the one or more plastics are selected from polyethylene (PE), such as low-density polyethylene (LDPE), linear low-density polyethylene (LLDPE), high-density polyethylene (HDPE), and ultra-high molecular weight polyethylene (UHMWPE); polypropylene (PP); polybutene (PB); polyisobutylene (PIB); polymethylpentene (PMP); ethylene-propylene rubber (EPR); ethylene-propylene-diene monomer (EPDM) rubber; olefin block copolymers (OBCs); stereo-block polypropylene (sPP); and mixtures thereof. The hydrogenolysis catalyst is particularly beneficial for the conversion of polyethylene (PE) and polypropylene (PP).

In the step of contacting the one or more plastics with the hydrogenolysis catalyst according to the present invention to provide a reaction mixture, the reaction mixture is preferably provided without a solvent.

The step of reacting the reaction mixture under the pressure of 3 MPa to 5 MPa of H₂ at 300°C to 500°C is preferably conducted in a batch reactor. In a preferred embodiment, the pressure of H₂ is 3.5 MPa to 4.5 MPa and more preferably 3.75 MPa to 4.25 MPa. To prevent other gases from being in the batch reactor, the batch reactor is preferably purged at least three times with H₂ before the pressure is set to the above-defined range.

In a preferred embodiment, the reaction mixture is stirred during the step of reacting the reaction mixture. The speed of stirring is not particularly limited but may be between 1.000 rpm and 1.600 rpm and preferably 1.200 to 1.400 rpm. If the stirring speed falls within the defined range, sufficient mixing is ensured during the reaction.

In a preferred embodiment, the temperature is 350°C to 450°C and more preferably 375°C to 425°C. The duration of reacting the reaction mixture is not particularly limited but can, for example, be in the range of 2 hours to 100 hours, preferably 30 hours to 70 hours, and more preferably 40 hours to 60 hours. By setting the parameters in the above-defined ranges, a naphtha-like reaction product can beneficially be obtained.

The step of cooling the reacted mixture down to room temperature is not particularly limited with respect to the cooling rate, which can, for example, be in the range from 6.7°C min⁻¹ to 10°C min⁻¹. According to the present invention, room temperature corresponds to 25°C.

In the final step, naphtha is separated from the reacted mixture. The solid catalyst is easily recycled since there are no solid by-products or solid residuals.
**Figure 1** shows XRD scans of Ir and/or Ru on carbon catalysts.
**Figure 2** shows XRD scans of Ir and/or Ru on SiO₂ catalysts.
**Figure 3** shows XPS spectra of Ir and/or Ru on carbon catalysts - Ir 4f region.
**Figure 4** shows TPR profiles of Ir and/or Ru on carbon catalysts - H₂O formation.
**Figure 5** shows TPR profiles of Ir and/or Ru on SiO₂ catalysts - H₂O formation.
**Figure 6** shows TPR profiles of Ir and/or Ru on carbon catalysts - H₂ depletion.
**Figure 7** shows TPR profiles of Ir and/or Ru on SiO₂ catalysts - H₂ depletion.
**Figure 8** shows the mapping of Ir and/or Ru on carbon catalysts.

### Examples

The following examples further illustrate the present invention without limiting the present invention thereto.

### [Example 1]

5 g of carbon having a particle size from 212 µm to 425 µm and a surface area of 1241.2 m² g⁻¹ was added to a crucible. 636.7 mg of iridium(III) acetylacetonate was dissolved in chloroform and incorporated into the carbon support dropwise via dry impregnation until the incipient wetness. The material was then dried at room temperature, and the addition of the metal solution was continued until there was no more metal precursor solution left. The obtained catalyst was first dried at room temperature under vacuum (approximately 1.33 hPa) overnight and then reduced in a tubular furnace under 60 mL min⁻¹ H₂ at 480°C for 2 h to obtain a 5 wt% iridium on carbon catalyst.

6 g of polyethylene and 214.3 mg of the 5 wt% iridium on carbon catalyst were added to a batch reactor. The batch reactor was purged three times with H₂ and then pressurized to 4 MPa. The pressurized batch reactor was heated to 400°C for 52 h. During the heating, the mechanical impeller of the autoclave reactor started at 150°C and kept on during the reaction. After the reaction, the batch reactor was cooled to room temperature and the liquid phase was fractionated up to 210°C to prevent column clogging in the subsequent chromatography analysis. The fractions were analyzed by PIONA analysis (i.e., paraffins, isoparaffins, olefins, naphthenes, and aromatics) according to the standard methods: European Norm International Organization for Standardization (EN ISO) 22854 and ASTM D6839. The results are shown in Table 1.

### [Example 2]

The catalyst production and the conversion test were carried out as described in Example 1, except that 604.9 mg of iridium(III) acetylacetonate and 49.3 mg of ruthenium(III) acetylacetonate were mixed with the carbon carrier to obtain a 4.75 wt% Ir/0.25 wt% Ru on carbon catalyst. The results are shown in Table 1.

### [Example 3]

The catalyst production and the conversion test were carried out as described in Example 1, except that 477.5 mg of iridium and 246.4 mg of ruthenium were mixed with the carbon carrier to obtain a 3.75 wt% Ir/1.25 wt% Ru on carbon catalyst. The results are shown in Table 1.

### [Comparative Example 1]

The catalyst production and the conversion test were carried out as described in Example 1, except that 159.2 mg of iridium and 739.1 mg of ruthenium were mixed with the carbon carrier to obtain a 1.75 wt% Ir/3.75 wt% Ru on carbon catalyst. The results are shown in Table 1.

### [Comparative Example 2]

The catalyst production and the conversion test were carried out as described in Example 1, except that 31.8 mg of iridium and 936.2 mg of ruthenium were mixed with the carbon carrier to obtain a 0.25 wt% Ir/4.75 wt% Ru on carbon catalyst. The results are shown in Table 1.

### [Comparative Example 3]

The catalyst production and the conversion test were carried out as described in Example 1, except that 985.4 mg of ruthenium was mixed with the carbon carrier to obtain a 5 wt% Ru on carbon catalyst and the catalyst was reduced at 300 °C. The results are shown in Table 1.

### [Comparative Example 4]

The catalyst production and the conversion test were carried out as described in Example 2, except that iridium and ruthenium were mixed with 5 g of SiO₂ having a particle size from 250 to 500 µm and a surface area of 300 m² g⁻¹ to obtain a 4.75 wt% Ir/0.25 wt% Ru on SiO₂ catalyst. The results are shown in Table 1.

### [Comparative Example 5]

The catalyst production and the conversion test were carried out as described in Example 3, except that iridium and ruthenium were mixed with 5 g of SiO₂ having a particle size of 250-500 µm and a surface area of 300 m² g⁻¹ to obtain a 3.75 wt% Ir/1.25 wt% Ru on SiO₂ catalyst. The results are shown in Table 1.

**Table 1: Summary of Activity Test Results**

| | **Catalyst** | **PIONA** |
|---|---|---|
| Example 1 | 5 wt% Ir on carbon | 68.7 - 20.4 -0.5 - 4.5 - 6.0 |
| Example 2 | 4.75 wt% Ir/0.25 wt% Ru on carbon | 80.0 - 12.1 - 0.3 - 3.2 - 4.4 |
| Example 3 | 3.75 wt% Ir/1.25 wt% Ru on carbon | 49.6 - 29.3 -0.2 - 4.2 - 16.7 |
| Comparative Example 1 | 1.75 wt% Ir/3.75 wt% Ru on carbon | 53.0 - 18.1 - 2.6 - 4.5 - 21.8 |
| Comparative Example 2 | 0.25 wt% Ir/4.75 wt% Ru on carbon | 66.1 - 16.0 - 2.1 - 5.5 - 10.4 |
| Comparative Example 3 | 5 wt% Ru on carbon | 70.9 - 16.0 - 1.0 - 6.1 - 6.1 |
| Comparative Example 4 | 4.75 wt% Ir/0.25 wt% Ru on SiO₂ | 55.8 - 10.1 - 13.7 - 11.0 - 9.5 |
| Comparative Example 5 | 3.75 wt% Ir/1.25 wt% Ru on SiO₂ | * |

| | | |
|---|---|---|
| * no liquid product was obtained | | |

First of all, all catalysts achieved a complete conversion of polyethylene. As shown in Table 1, the olefin content in Examples 1 to 3 is less than 1%, whereas the olefin content in Comparative Examples 1 to 5 is 1% or more. This demonstrates the importance of having a high Ir content supported carbon as the carrier. In addition, Example 3 shows the closest resemblance to naphtha.

### [Example 4]

The 5 wt% Ir on carbon catalyst of Example 1 was tested for stability when subjected to thermal aging. Thermal aging was conducted in a tubular furnace at 480°C for 54 h under 60 mL min⁻¹ H₂ flow. The results are shown in Table 2.

**Table 2: Effect of aging**

| | **Note** | **PIONA** |
|---|---|---|
| Example 1 | Fresh catalyst | 68.7 - 20.4 -0.5 - 4.5 - 6.0 |
| Example 4 | Thermally aged catalyst | 74.2 - 16.2 - 0.4 - 3.3 - 5.9 |

As shown in Table 2, thermal aging has no significant effect on the proportions of the product mixture, which makes the catalyst of the present invention beneficial for multiple applications.

## Claims

1. A hydrogenolysis catalyst, wherein the catalyst comprises:
a carrier made of carbon, and, supported on said carrier,
an active metal which is selected from
(a) iridium in an amount of 1 wt% to 6 wt%, based on the total weight of the catalyst, or
(b) iridium in an amount of 1 wt% to 6 wt% together with ruthenium in an amount of 0.1 wt% to 3 wt%, based on the total weight of the catalyst.

2. The hydrogenolysis catalyst according to claim 1,
wherein the carrier is microporous carbon.

3. The hydrogenolysis catalyst according to claim 1 or 2,
wherein the carrier has a surface area of 200 m² g⁻¹ to 1300 m² g⁻¹.

4. The hydrogenolysis catalyst according to any one of claims 1 to 3,
wherein the carrier has a particle size of 10 to 100 µm.

5. The hydrogenolysis catalyst according to any one of claims 1 to 4,
wherein the hydrogenolysis catalyst comprises 3 wt% to 5 wt% iridium and 1 wt% to 2 wt% ruthenium, based on the total weight of the catalyst.

6. A method for preparing the hydrogenolysis catalyst according to any one of claims 1 to 5, comprising
mixing iridium and optionally ruthenium in a solvent to obtain a mixture;
adding the obtained mixture to the carrier made of carbon and removing the solvent; and
heating the carbon carrier to which the iridium and optionally the ruthenium have been added under hydrogen gas.

7. The preparation method according to claim 6, wherein
the iridium is iridium(III) acetylacetonate and the ruthenium is ruthenium(III) acetylacetonate.

8. A method for converting one or more plastic polymers into naphtha, comprising contacting the one or more plastics with the hydrogenolysis catalyst according to any one of claims 1 to 5;
reacting the reaction mixture under the pressure of 3 MPa to 5 MPa of H₂ at 300°C to 500°C;
cooling the reacted mixture down to room temperature; and
separating naphtha from the reacted mixture.

9. The conversion method according to claim 8, wherein
the one or more plastic polymers are selected from polyethylene, polypropylene, polybutene, polyisobutylene, polymethylpentene, ethylene-propylene rubber, ethlyene-propylene-diene monomer rubber, olefin block copolymers, stereo-block polypropylene, and mixtures thereof.

## Amended claims

### Amended claims in accordance with Rule 137(2) EPC.

1. A method for converting one or more plastic polymers into naphtha, comprising contacting the one or more plastics with a hydrogenolysis catalyst, wherein the catalyst comprises:
a carrier made of carbon, and, supported on said carrier,
an active metal which is iridium in an amount of 3 wt% to 5 wt% together with ruthenium in an amount of 0.1 wt% to 3 wt%, based on the total weight of the catalyst;
reacting the reaction mixture under the pressure of 3 MPa to 5 MPa of H₂ at 300°C to 500°C;
cooling the reacted mixture down to room temperature; and
separating naphtha from the reacted mixture.

2. The conversion method according to claim 1, wherein
the one or more plastic polymers are selected from polyethylene, polypropylene, polybutene, polyisobutylene, polymethylpentene, ethylene-propylene rubber, ethlyene-propylene-diene monomer rubber, olefin block copolymers, stereo-block polypropylene, and mixtures thereof.

3. The conversion method according to claim 1 or 2,
wherein the carrier is microporous carbon.

4. The conversion method according to any one of claims 1 to 3,
wherein the carrier has a surface area of 200 m² g⁻¹ to 1300 m² g⁻¹.

5. The conversion method according to any one of claims 1 to 4,
wherein the carrier has a particle size of 10 to 100 µm.

6. The conversion method according to any one of claims 1 to 5,
wherein the hydrogenolysis catalyst comprises 3 wt% to 5 wt% iridium and 1 wt% to 2 wt% ruthenium, based on the total weight of the catalyst.

7. Use of a hydrogenation catalyst for converting one or more plastic polymers into naphtha, wherein the catalyst comprises:
a carrier made of carbon, and, supported on said carrier,
an active metal which is iridium in an amount of 3 wt% to 5 wt% together with ruthenium in an amount of 0.1 wt% to 3 wt%, based on the total weight of the catalyst.
